# FASCICULE DE BREVET EUROPEEN

(11) **EP 3 050 171 B1**
(45) Date de publication et mention de la délivrance du brevet: **11.07.2018**
(21) Numéro de dépôt: 14759019.4
(22) Date de dépôt: 30.07.2014
(51) Int. Cl.: H01R 11/28, H01R 13/639

(54) **SYSTÈME DE CONNEXION D'UNE BATTERIE**
VERBINDUNGSSYSTEMS EINER BATTERIE
CONNECTION SYSTEM OF A BATTERY

(30) Priorité: 24.09.2013 FR 1359176
(43) Date de publication de la demande: 03.08.2016
(73) Titulaire: Renault S.A.S., 92100 Boulogne-Billancourt (FR)
(72) Inventeur: FRICOU, Hervé, F-91400 Orsay (FR); GUIGNARD, Fabrice, F-78280 Guyancourt (FR); CHRETIEN, Olivier, F-78120 Rambouillet (FR); AGNOLA, Olivier, F-78320 Le Mesnil Saint Denis (FR)
(86) Numéro de dépôt international: PCT/FR2014/051977
(87) Numéro de publication internationale: WO 2015/044544

(56) Documents cités:
- DE-A1- 4 340 007
- DE-B- 1 074 686
- US-A- 2 551 990
- US-A- 5 132 194

## Description

### Domaine technique

La présente invention se rapporte à la sécurisation d'un système de connexion d'une batterie dans un véhicule automobile, en particulier à un système de connexion d'une batterie pour un véhicule automobile , le système comportant un plot de la batterie et une cosse destinée à être serrée sur le plot.

### Etat de la technique

Les circuits électriques d'un véhicule automobile sont typiquement alimentés par une batterie délivrant une tension de 12V. La batterie est une pièce normalisée, de section prédéterminée, et de longueur pouvant être choisie parmi plusieurs longueurs standards. La batterie comporte deux plots de connexion dont les positions et les dimensions sont également normalisées. Chaque plot est disposé sur une face supérieure de la batterie et est de forme tronconique, la partie la plus étroite du tronc de cone étant orientée vers l'extérieur. Un système de connexion électrique de la batterie comporte une cosse pour chaque plot. La cosse est destinée à être emmanchée sur la surface tronconique du plot correspondant. La cosse est fendue et comporte une vis ou un boulon de serrage afin de fermer élastiquement la cosse sur le plot en rapprochant les faces de la fente. D'autres dispositifs de cosse existent également.

Le changement de batterie est un événement courant. Un tel système de connexion présente un risque de mauvais montage si la cosse est en place mais que la vis n'a pas été serrée ou de manière insuffisante. Un mauvais serrage ne provoque pas une panne immédiate : tant que la cosse repose sur le plot du fait de son poids, le défaut peut passer inaperçu. Mais lors de la circulation du véhicule, du fait des vibrations générées par la route, la cosse peut vibrer et subir une perte de contact électrique entre la cosse et le plot.

Un tel système de connexion d'une batterie est connu par exemple de US-2 551 990.

Il est donc possible d'avoir, suite à un mauvais remontage de la cosse, une batterie qui se déconnecte au moins par intermittence. Une telle panne peut amener à une immobilisation du véhicule.

L'invention vise donc à fournir un système de sécurisation de la connexion d'une batterie dans un véhicule automobile.

### Description de l'invention

Avec ces objectifs en vue, l'invention telle que définie dans la revendication 1 a pour objet un système de connexion d'une batterie dans un véhicule automobile, le système comportant un plot de la batterie et une cosse destinée à être serrée sur le plot par emmanchement sur une surface tronconique ayant un axe de plot, le système comportant en outre des moyens de sécurisation de la connexion apte à appuyer élastiquement la cosse vers la batterie dans l'axe de plot.

Les moyens de sécurisation forcent l'emmanchement des parties tronconiques l'une sur l'autre, de sorte que la continuité électrique est assurée en permanence. Les essais ont montrés que les ruptures ou affaiblissements de contact que l'on constate lorsque la cosse n'est pas serrée disparaissent avec la mise en oeuvre de l'invention.

En repoussant de manière élastique la cosse sur le plot, on force l'emmanchement des parties coniques respectives du plot et de la cosse. On constate lors d'essais que la continuité électrique est bien assurée, même si la vis ou le boulon de la cosse n'est pas serré. Ainsi, même en cas de mauvais remontage de la batterie, l'alimentation électrique du véhicule n'est pas compromise.

Selon une disposition constructive, les moyens de sécurisation comportent un support fixé par rapport à la batterie et des moyens élastiques interposés entre le support et la cosse.

Selon un premier mode de réalisation, le système comporte une boite de protection apte à contenir la batterie, la boite comportant un couvercle fixé de manière amovible sur une caisse et jouant le rôle du support. La caisse est destinée à contenir la batterie et à être fermée par le couvercle, afin d'assurer une protection de la batterie principalement contre la chaleur. Le couvercle sert alors de support et, lorsqu'il est en place, en regard du plot et de la cosse, les moyens élastiques s'y appuient de manière élastique pour exercer une pression sur la cosse.

Selon un deuxième mode de réalisation, le support est fixé directement sur la batterie. S'il n'est pas prévu de placer la batterie dans une boite, il peut être plus simple de prévoir un support spécifique. Ce peut être par exemple un arceau passant au-dessus de la batterie et fixé directement à la batterie, par exemple par encliquetage.

Pour chaque mode de réalisation, différentes techniques peuvent être utilisées pour les moyens élastiques.

Selon une disposition, les moyens élastiques comportent un bloc de mousse fixé sur le support et apte à être comprimé entre la cosse et le support. Ces moyens sont très simples à réaliser. De plus, ils permettent une adaptation à des variations de la position du plot vis-à-vis du support, en fonction de la taille de la batterie ou de son positionnement. Il suffit pour cela de prévoir un bloc de mousse suffisamment large. La force d'appui peut être réglée par le choix de la densité de la mousse.

Selon une autre disposition, les moyens élastiques comportent une plaque en matière isolante électriquement et des ressorts fixés sur le support et aptes à être comprimés entre le support et la plaque lorsque celle-ci est en appui contre la cosse. La force d'appui peut être réglée par le choix de la raideur des ressorts et la position de la plaque relativement au support.

Selon une autre disposition, les moyens élastiques comportent un tampon en élastomère fixé sur la cosse en faisant saillie vers le support et apte à être comprimé entre la cosse et le support. Le tampon peut être de taille réduite puisqu'il suit la position de la cosse et peut prendre appui sur le support toujours à la même distance. Il est réalisé par exemple en EPDM.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective d'une boite contenant une batterie pour un véhicule automobile selon un premier mode de réalisation de l'invention ;
- la figure 2 est une vue partielle en perspective d'une batterie contenue dans la boite de la figure 1 et d'une cosse connectée à la batterie ;
- la figure 3 est une vue en éclaté de l'ensemble de la figure 1 ;
- les figures 4 et 5 sont des vues partielles et schématiques en coupe de l'ensemble de la figure 1, selon une première technique, pour deux batteries de taille différente ;.
- les figures 6 et 7 sont des vues partielles et schématiques en coupe de l'ensemble de la figure 1, selon une deuxième technique, pour deux batteries de taille différente ;.
- les figures 8 et 9 sont des vues partielles et schématiques en coupe de l'ensemble de la figure 1, selon une troisème technique, pour deux batteries de taille différente ;
- la figure 10 est une vue similaire à la figure 9 selon un deuxième mode de réalisation de l'invention.

### DESCRIPTION DETAILLEE

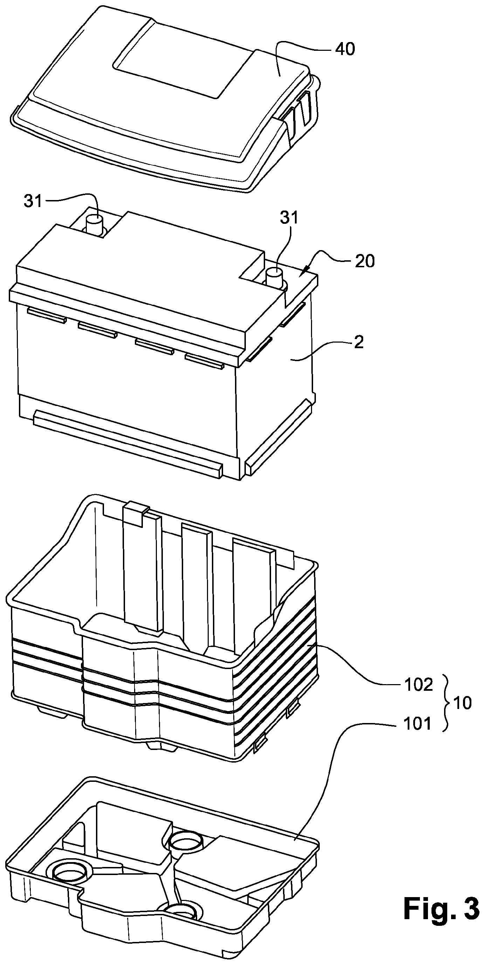

Selon un premier mode de réalisation de l'invention, un véhicule automobile comporte une boite 1 et une batterie 2 contenue dans la boite 1. La boite 1, tel que montré sur la figure 3 comporte une caisse 10 formée d'un socle 101 et d'une ceinture 102 assemblés par encliquetage. Une batterie 2 est insérée de manière amovible dans la caisse 10. La boite 1 comporte en outre un couvercle 40 qui ferme la caisse 10 de manière à fermer la boite 1. La fixation du couvercle 40 est également réalisée par encliquetage de manière amovible, d'une manière connue en soi.

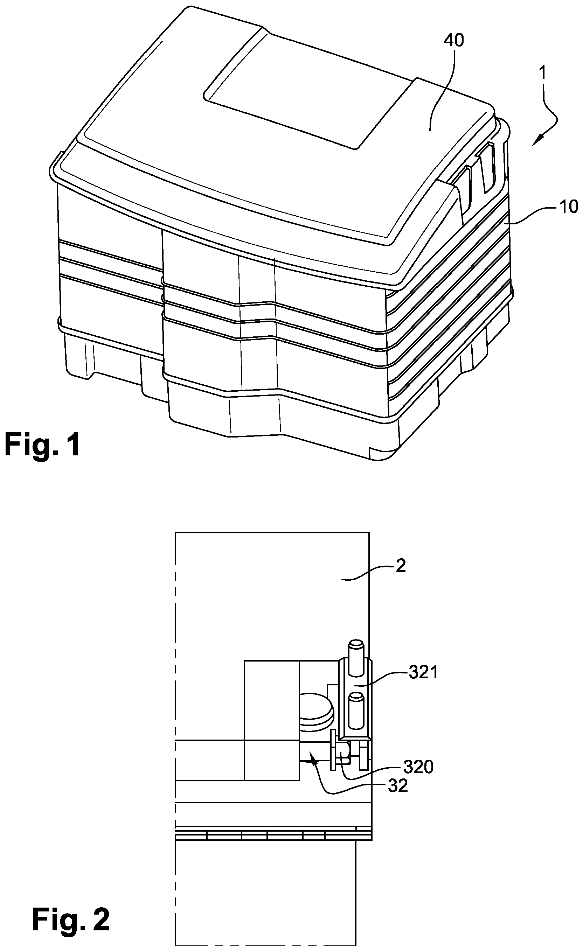

La batterie 2 comporte deux plots 31 de connexion électrique dont les positions et les dimensions sont également normalisées. Chaque plot 31 est disposé sur une face supérieure 20 de la batterie 2 et est de forme tronconique, la partie la plus étroite du tronc de cone étant orientée vers l'extérieur. Un système de connexion 3 électrique de la batterie 2 comporte une cosse 32 pour chaque plot 31. La cosse 32, comme montrée sur la figure 2, est destinée à être emmanchée sur la surface tronconique du plot 31 correspondant. La cosse 32 est fendue et comporte une vis ou un boulon de serrage 320 afin de fermer élastiquement la cosse 32 sur le plot 31 en rapprochant les faces de la fente. La cosse 32 comporte en outre un bras 321 pour la connexion d'un câble électrique, non représenté.

Conformément à l'invention, le système de connexion 3 comporte en outre des moyens de sécurisation 4 de la connexion apte à appuyer élastiquement la cosse 32 vers la batterie 2 dans l'axe de plot 31. Les moyens de sécurisation 4 comportent un support 40 fixé par rapport à la batterie 2 et des moyens élastiques 41 interposés entre le support et la cosse 32.

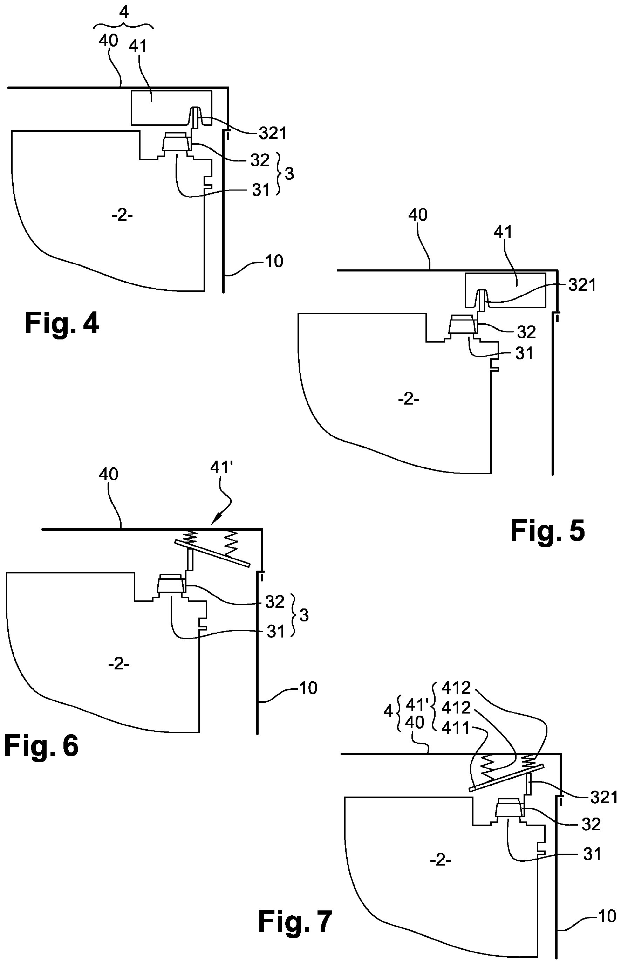

Selon une première technique, représentée sur les figures 4 et 5, les moyens élastiques comportent un bloc de mousse 41 fixé sur le couvercle 40 qui sert de support. Le bloc de mousse 41 est apte à être comprimé entre la cosse 32 et le support 40, en prenant appui sur le bras 321 de la cosse 32. Selon que la batterie 2 est longue, comme montré sur la figure 4, ou courte, comme montré sur la figure 5, le bras 321 de la cosse 32 vient en appui sur différentes zones du bloc de mousse 41. Cependant, l'effet obtenu est le même. Si un opérateur change la batterie 2, il enlève le couvercle 40, débranche les cosses 32 et retire la batterie 2. Puis il met en place une nouvelle batterie 2, remet les cosses 32 en place puis le couvercle 40. Comme les blocs de mousse sont intégrés au couvercle 40, ils viennent naturellement appuyer sur le bras 321 de la cosse 32 et maintenir celle-ci engagée sur le plot 31. L'opérateur n'a pas d'opération spécifique à effectuer en lien avec les dispositions de l'invention. Les opérations qu'il assure habituellement permettent d'obtenir l'effet de l'invention.

Selon une deuxième technique, montrée sur les figures 6 et 7, les moyens élastiques 41' comportent une plaque 411 en matière isolante électriquement et des ressorts 412 fixés sur le support 40 et aptes à être comprimés entre le support 40 et la plaque 411 lorsque celle-ci est en appui contre la cosse 32. Selon que la batterie 2 est courte, comme montré sur la figure 6, ou longue, comme montré sur la figure 7, le bras 321 de la cosse 32 vient en appui sur différentes zones de la plaque 411 et ressorts 412.

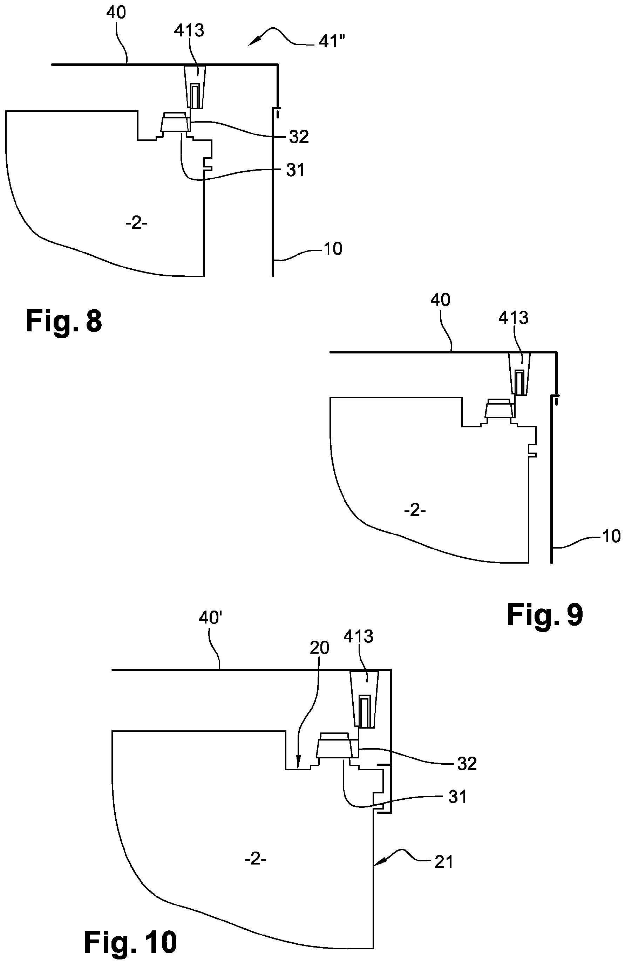

Selon une troisième technique, montrée sur les figures 8 et 9, les moyens élastiques 41" comportent un tampon 413 en élastomère fixé sur le bras 321 de la cosse 32 en faisant saillie vers le support. Le tampon 413 est apte à être comprimé entre la cosse 32 et le couvercle 40 lorsque ce dernier est placé sur la caisse 10. Si la longueur de la batterie 2 change, le tampon 413 vient quand même en appui contre le couvercle 40, en différents endroits, comme le montre les différences entre les figures 8 et 9.

Dans un deuxième mode de réalisation de l'invention, représenté sur la figure 10, la batterie 2 n'est pas placée dans une boite 1, mais le système de connexion 3 selon l'invention comporte un support en forme d'arceau 40' qui s'encliquette directement avec la batterie 2, le long d'une face 21 perpendiculaire la face supérieure 20. Dans la version présentée, les moyens élastiques comporte le tampon 413. Cependant, la première et la deuxième technique peuvent être utilisées également avec l'arceau 40'.

## Revendications

1. Système de connexion (3) d'une batterie (2) pour un véhicule automobile, le système comportant un plot (31) de la batterie (2) et une cosse (32) destinée à être serrée sur le plot (31) par emmanchement sur une surface tronconique ayant un axe de plot (31), la cosse (32) comportant un bras (321) solidaire de la cosse (32) et des moyens de sécurisation (4) de la connexion en appui sur le bras (321) de façon à appuyer élastiquement la cosse (32) vers la batterie (2) dans l'axe de plot (31),
**caractérisé en ce que** le bras (321) est adapté à la connexion d'un câble électrique.

2. Système selon la revendication 1, dans lequel les moyens de sécurisation (4) comportent un support (40) fixé par rapport à la batterie (2) et des moyens élastiques (41) interposés entre le support (40) et la cosse (32).

3. Système selon la revendication 2, **caractérisé en ce qu'**il comporte une boîte apte à contenir la batterie (2), la boîte (1) comportant un couvercle (40) fixé de manière amovible sur une caisse (10) et jouant le rôle du support (40).

4. Système selon la revendication 2, dans lequel le support (40) est fixé directement sur la batterie (2).

5. Système selon l'une des revendications 2 à 4, selon lequel les moyens élastiques (41) comportent un bloc de mousse (41) fixé sur le support (40) et apte à être comprimé entre la cosse (32) et le support (40).

6. Système selon l'une des revendications 2 à 4, selon lequel les moyens élastiques (41) comportent une plaque (411) en matière isolante électriquement et des ressorts (412) fixés sur le support (40) et aptes à être comprimés entre le support (40) et la plaque (411) lorsque celle-ci est en appui contre la cosse (32).

7. Système selon l'une des revendications 2 à 4, selon lequel les moyens élastiques (41) comportent un tampon (413) en élastomère fixé sur la cosse (32) en faisant saillie vers le support (40) et apte à être comprimé entre la cosse (32) et le support (40).

## Patentansprüche

1. Verbindungssystem (3) einer Batterie (2) für ein Kraftfahrzeug, wobei das System einen Anschluss (31) der Batterie (2) und eine Hülse (32) umfasst, die dazu bestimmt ist, auf den Anschluss (31) durch Aufschrumpfen auf einer kegelstumpfförmigen Oberfläche, die eine Achse des Anschlusses (31) hat, geklemmt zu werden, wobei die Hülse (32) einen Arm (321) umfasst, der fest mit der Hülse (32) verbunden ist, und Befestigungsmittel (4) der Verbindung in Auflage auf dem Arm (321) derart, dass die Hülse (32) federnd zu der Batterie (2) in der Achse des Anschlusses (31) angedrückt wird, **dadurch gekennzeichnet, dass** der Arm (321) an die Verbindung eines elektrischen Kabels angepasst ist.

2. System nach Anspruch 1, wobei die Befestigungsmittel (4) einen Träger (40) umfassen, der in Bezug auf die Batterie (2) befestigt ist, und federnde Mittel (41), die zwischen den Träger (40) und die Hülse (32) eingefügt sind.

3. System nach Anspruch 2, **dadurch gekennzeichnet, dass** es ein Gehäuse umfasst, das geeignet ist, um die Batterie (2) zu enthalten, wobei das Gehäuse (1) einen Deckel (40) umfasst, der abnehmbar auf einem Kasten (10) befestigt ist und die Aufgabe des Trägers (40) übernimmt.

4. System nach Anspruch 2, wobei der Träger (40) direkt auf der Batterie (2) befestigt ist.

5. System nach einem der Ansprüche 2 bis 4, wobei die federnden Mittel (41) einen Schaumstoffblock (41) umfassen, der auf dem Träger (40) befestigt und angepasst ist, um zwischen der Hülse (32) und dem Träger (40) komprimiert zu sein.

6. System nach einem der Ansprüche 2 bis 4, wobei die federnden Mittel (41) eine Platte (411) aus elektrisch isolierendem Material und Federn (412) umfassen, die auf dem Träger (40) befestigt und geeignet sind, zwischen dem Träger (40) und der Platte (411) komprimiert zu sein, wenn diese gegen die Hülse (32) anliegt.

7. System nach einem der Ansprüche 2 bis 4, wobei die federnden Mittel (41) einen Puffer (413) aus Elastomer umfassen, der auf der Hülse (32) befestigt ist, indem er zu dem Träger (40) vorragt und geeignet ist, zwischen der Hülse (32) und dem Träger (40) komprimiert zu sein.

## Claims

1. Connection system (3) of a battery (2) for a motor vehicle, the system including a stud (31) of the battery (2) and a clamp (32) intended to be tightened on the stud (31) by fitting onto a truncated surface having a stud (31) axis, the clamp (32) including an arm (321) that is rigidly connected to the clamp (32) and means (4) for securing the connection against the arm (321) so as to elastically press the clamp (32) towards the battery (2) in the stud (31) axis, **characterized in that** the arm (321) is suitable for the connection of an electrical cable.

2. System according to Claim 1, wherein the securing means (4) include a supporting means (40) fixed relative to the battery (2) and elastic means (41) inserted between the supporting means (40) and the clamp (32).

3. System according to Claim 2, **characterized in that** it includes a box suitable for containing the battery (2), the box (1) including a lid (40) removably fixed on a case (10) and acting as the supporting means (40).

4. System according to Claim 2, wherein the supporting means (40) is fixed directly on the battery (2).

5. System according to one of Claims 2 to 4, according to which system the elastic means (41) include a foam block (41) fixed on the supporting means (40) and suitable for being compressed between the clamp (32) and the supporting means (40).

6. System according to one of Claims 2 to 4, according to which system the elastic means (41) include a plate (411) made of electrically insulating material and springs (412) fixed on the supporting means (40) and suitable for being compressed between the supporting means (40) and the plate (411) when the latter presses against the clamp (32).

7. System according to one of Claims 2 to 4, according to which system the elastic means (41) include an elastomeric buffer (413) fixed on the clamp (32) while projecting towards the supporting means (40) and suitable for being compressed between the clamp (32) and the supporting means (40).
